# EUROPEAN PATENT APPLICATION

(11) **EP 4 672 106 A1**
(43) Date of publication of application: **31.12.2025**
(21) Application number: 24185341.5
(22) Date of filing: 28.06.2024
(51) Int. Cl.: G06Q 10/0631, G06Q 10/0639, G06Q 10/10, G06Q 50/04

(54) **METHOD AND DEVICE FOR PERFORMING A TECHNICAL PRODUCTION JOB**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

A computer-implemented method of performing a technical production job (101, 102) in a number of production steps (110-114) using a plurality of production resources (201-206), wherein a respective trustworthiness requirement (130-134) is defined for each of the production steps, comprises: a) determining trustworthiness information (220) for the plurality of the production resources; b) creating a production schedule (250) in which each of the number of production steps is assigned to one or more specific ones of the plurality of production resources, wherein the production schedule is created in consideration of the trustworthiness requirements of the production steps and the determined trustworthiness information of the production resources; and c) causing the technical production job to be performed according to the created production schedule.

The method ensures that production is performed in a trustworthy way even in a flexible production environment.

## Description

*Independent of the grammatical term usage, individuals with male, female or other gender identities are included within the term.*

The present invention relates to industry 4.0, and more particular to a method of and a device for performing a technical production job.

A main aspect of industry 4.0 is supporting flexible production, in which production machines, tools, and raw materials are scheduled for use flexibly to address changing production demands and changing production resource availabilities. Such flexible production may happen on a single manufacturing site, but flexible production is also applied in outsourcing scenarios, i.e. in which various steps of a production job are distributed over multiple sites or different production operators.

Another important aspect is trustworthiness. Especially in a case where production is outsourced (is being distributed over multiple sites or different production operators), it is important to ensure that products are of an expected quality, are genuine (contain genuine and untampered-with components), and to ensure that sensitive production know-how is kept confidential. Such trustworthiness depends on policies implemented by the involved production operators.

When production resources are scheduled manually in advance, using digital twins, ERP (Enterprise Resource Planning) and automation systems, trustworthiness of the involved production resources can be evaluated. However, ensuring trustworthiness becomes difficult to ensure when product jobs are scheduled flexibly and dynamically in an Industry 4.0 scenario.

It is one object of the present invention to improve the handling of trustworthiness expectations in a flexible Industry 4.0 production scheduling scenario.

Accordingly, under a first aspect, there is proposed a computer-implemented method of performing a technical production job in a number of production steps using a plurality of production resources, wherein a respective trustworthiness requirement is defined for each of the production steps. The proposed method comprises: a) determining trustworthiness information for the plurality of the production resources; b) creating a production schedule in which each of the number of production steps is assigned to one or more specific ones of the plurality of production resources, wherein the production schedule is created in consideration of the trustworthiness requirements of the production steps and the determined trustworthiness information of the production resources; and c) causing the technical production job to be performed according to the created production schedule.

Accordingly, the production steps of the production job are flexibly and automatically scheduled over different production resources, but always automatically in consideration of the trustworthiness requirements of the production steps and the automatically determined trustworthiness information of each production resource. In this way, even in a flexible Industry 4.0 scenario, in which different production resources may be provided by different operators and the like, it can be ensured advantageously that the predetermined trustworthiness requirements are met.

That is, the proposed method advantageously may allow to perform a highly flexible production that fulfills specific trustworthiness requirements of different production steps of a technical production job.

A production schedule (or production plan) may define which production steps are to be performed using which production resource.

Herein, a production resource may be any one or more of a machine, a facility or a production site. Furthermore, a production resource may also be any one or more of: a raw material, an additional equipment (such as a machine tool, a test tool, or an automated guided vehicle), a user, operator or owner of the machine, facility or production site, a communication infrastructure that is used, a network component used to access the communication infrastructure (define e.g. by its manufacturer, model and firmware revision), and the like.

It is noted that independent of the grammatical term usage, of terms such as "user", "operator" or "owner", individuals with male, female or other gender identities are included within the term.

The trustworthiness information obtained for each production resource may comprise a trustworthiness rating. Alternatively, and preferably, the trustworthiness information may list trust-related properties of the production resources. Examples in the case in which the production resource is a machine, facility, or production site include information about: whether a communication infrastructure used by the production resource is factory-owned, is a private service provided by a mobile network operator, or is a public mobile communications network; a patch level of firmware or software of network components, computing devices and the like of the production resource and/or an information whether said patch level is up to date; whether a computing device comprised by the production resource has a configuration is compliant with a defined security policy; properties of a network domain to which a computing device comprised by the production resource is connected, such as whether the production resource is connected to an isolated network, to a general factory network, or to the Internet; whether a computing device comprised by the (or configured to control the) production resource has tamper protection; whether a computing device comprised by the (or configured to control the) production resource includes a hardware-backed key store; whether a computing device comprised by the (or configured to control the) production resource has a valid security certification; a property of an environment of the production resource, such as environment properties (such as location, whether an environment is security-protected, what access restrictions apply, whether an alarm system is present, and the like); or an identity and/or a security clearance of an owner or operator of the production resource. In the case where the production resource is a raw material, examples for trustworthiness information may include the same examples listed above, relating to a production resource with which the raw material was obtained, for example. The trustworthiness information can also be considered as a trustworthiness attestation of the respective production resource.

According to the proposed method, such trustworthiness information is obtained automatically. Preferably, the trustworthiness information is cryptographically protected by a cryptographic checksum (such as a digital signature, or a message authentication code), so that the trustworthiness information is provided in a trustworthy way.

The trustworthiness information may be obtained from the production resource itself or from a Digital Twin of the production resource, for example. Further embodiments of how and wherefrom to obtain the trustworthiness information may be obtained automatically will be discussed below.

Trustworthiness requirements may be different for each production step. For example, some production steps may require high business-relevant know how (e.g. manufacturing know how), some may require high access protection (to avoid unauthorized persons stealing original equipment and replacing it with low-quality fakes), other production steps may have high cybersecurity demands (e.g. installing firmware, provisioning cryptographic keys and/or credentials on the product during production, testing of security functions of the product, e.g., of a true random number generator, and the like).

In step b), the production schedule may be created based on any conventional criteria, such as availability of production resources, cost of production resources, and the like. However, additionally, according to the proposed method, the production schedule is created also in consideration of the respective trustworthiness requirements of the respective production steps and the determined trustworthiness information of the production resources, which may be used as conditions or otherwise. I.e., the production schedule is created such that all trustworthiness requirements are met, or that all trustworthiness requirements are met as much as possible given the production resources that are available for selection.

It is noted that the term "a number of', as used herein, shall designate to a number N ≥ 1, i.e., "a number of" comprises "a single one" as well as "a plurality of".

According to an embodiment, step a) is repeated in cycles while the technical production job is in progress, and if any of the determined trustworthiness information has changed, the production schedule is modified in consideration of the changed trustworthiness information.

That is, trustworthiness information of at least one of the production resources may change while the technical production step is in progress. For example, a patch level of a firmware of a computing device may become outdated, and if the computing device is not patched to the newest level, the production resource's trustworthiness decreases. Such changes of trustworthiness of a production resource may advantageously be detected by repeating step a) in cycles, and the production schedule may then be modified accordingly to ensure that the technical production job continues to produce trustworthy products.

It is noted that a technical production job may be in progress for a long time if a large number of products is being produced, or if complex and/or many production steps are involved.

According to a further embodiment, step b) is repeated in cycles while the technical production job is in progress.

That is, due to changing availability, cost or the like of the production resources, the production schedule may be updated or recreated while the technical production job is in progress. According to the embodiment, whenever this happens, the new or updated production schedule is again determined in consideration of the trustworthiness requirements of the production steps and the determined trustworthiness information of the production resources (which may also be updated, i.e. step a) may also be repeated). Thus, advantageously, it can be ensured that even in a dynamic scenario wherein production resources are frequently changed, the trustworthiness requirements are always met or are always met as good as possible.

According to a further embodiment, the trustworthiness information is obtained from a cryptographically secured trustworthiness attestation issued by a trusted computing base of a computing device controlling the respective production resource.

A trusted computing base (TCB) of a computing device may be the set of all hardware, firmware, and/or software components that are critical to its security, in the sense that bugs or vulnerabilities occurring inside the TCB might jeopardize the security properties of the entire system. Such a trusted computing base may be implemented using, inter alia, a secure element, such as a discrete TPM chip, or an integrated TPM on Intel^{®} processors, or a firmware-based TPM, or using a specifically attack-protected trusted execution environment, to secure its relevant portions, such as cryptographic keys, measurement code and the like, from tampering. It is known that TPM can provide cryptographically signed attestations of computing device properties. It is also contrived that the TCB may include measurement code that measures properties not only of the computing device, but also of the production resource that is controlled by the computing device.

In this way, the cryptographically secured trustworthiness attestation issued by the TCB can be trusted by the production owner if the production owner is in a trust relationship with a manufacturer of the computing device who has supplied the trusted code base.

Herein, the computing device may be an industrial controller that controls a production resource such as a machine, a factory or the like. The computing device may also be an industrial controller that controls a machine, a factory or the like that produces a raw material that is the production resource.

Thus, advantageously, a trusted computing base of an industrial controller can be deployed to derive cryptographically secured trustworthiness information for advantageous use in the proposed method of scheduling production steps of a production job in consideration of their trustworthiness requirements. For example, the trusted code base of the industrial controller may provide the secured trustworthiness information as a cryptographically protected attestation, e.g., as a platform attestation of the production resource.

According to a further embodiment, the trustworthiness information is obtained from a distributed ledger comprising records of trustworthiness information of the production resources.

A distributed ledger, such as a blockchain, may employ a consensus algorithm between distributed computing nodes to ensure that any information that is registered in the distributed ledger cannot be changed at a later point in time without achieving a consensus of all involved computing nodes. Forging of consensus may be made virtually impossible through mechanisms such as proof-of-work or proof-of-stake. Thus, by distribution a larger number of computing nodes among a plurality of stakes holders, the information registered in a distributed ledger may be considered to be practically immutable.

In an Industry 4.0 scenario in which configuration changes of production resources are logged in a distributed ledger, the distributed ledger can advantageously serve as a trustworthy source of trustworthiness information for the proposed method.

The trustworthiness information of a production resource may be provided also by alternative ways, e.g., by a trustworthiness information service, e.g., a web-based service.

According to a further embodiment, the trustworthiness information is obtained from a management system managing the production resources.

The management system may be a device management system, an Enterprise Resource Planning, ERP, system or the like.

According to a further embodiment, the respective trustworthiness requirement and/or the respective trustworthiness information relate to a property of the computing device controlling the respective production resource.

Such a property may be a firmware code, a firmware revision, a configuration, a policy to which the configuration conforms, a network domain to which the computing device is connected, presence or absence of hardware tamper protection, presence or absence of a physical key store, presence or absence of an independent security certification or audit, and the like.

According to a further embodiment, the proposed method further comprises: d) for each product produced in step c), providing a cryptographically secured certificate certifying those trustworthiness requirements that are met by the product.

That is, since the proposed method schedules production steps of the production job under consideration of trustworthiness requirements and acquired trustworthiness information, and also causes the production steps to be performed according to the trustworthiness requirements, a computer-implemented device (or cloud service, or the like) performing the proposed method is in a position to know which produced product complies to which of the trustworthiness requirements to which degree, and can thus issue a corresponding certification.

More particularly, the proposed method may comprise, while the technical production job is in progress, generating evidence confirming the trustworthiness of the production resources used to perform each production step of the production job. Such evidence can be collected as digitally signed database entries in an encrypted database, or as entries in a distributed ledger, such as a Blockchain, and the like. Such evidence information allows to prove later, for each product produced, that the trust requirements were fulfilled in fact for each performed production step of the production job. This can be used to perform an independent audit to verify that the trustworthiness requirements were fulfilled. Preferably, this information is linked to identities of the produced product, confirming that a certain product, as identified by its identity, has been produced in a trustworthy way. This information confirming the trustworthiness of the good can be provided, e.g., in the form of a digitally signed document or by a digitally signed product certificate to customers.

Thus, advantageously, the process of certifying trustworthiness of produced products can be automated in a trustworthy manner.

Furthermore, the collected evidence may support automated security audits of a production site or production job based on the evidence created during production, supporting an efficient way to ensure production security in highly dynamic production environments. It may also be possible to verify by the product owner that an outsourced production is being or has been performed in a trustworthy way.

According to a further embodiment, the cryptographically secured certificate is cryptographically linked to an identity of the produced product.

For example, a good credential, such as an IDevID digital device certificate, or a BRSKI onboarding voucher, or a digital product passport DPP, may be provided only for goods for which the collected evidence confirms that this good has been produced in a trustworthy way. For this, a local registration authority RA used to access a PKI security infrastructure (CA, certification authority) can validate that the production has been performed in line with the defined production trustworthiness requirements before issuing a digital certificate (IDevID) for a produced good. An IDevID digital device certificate or a BRSKI voucher is cryptographically linked to an identity of the produced product and in one variant, its mere existence certifies the trustworthiness. Alternatively, or in addition, it is possible that an attribute of the issued digital certificate encodes a production trustworthiness information that confirms that the product referenced by this certificate has been produced in line with production trustworthiness requirements as indicated by the encoded production trustworthiness information. Similarly, a digitally signed document or a digitally signed product certificate provided to customers can be checked by the customer's RA when a LDevID certificate is requested for the product.

According to a further embodiment, the cryptographically secured certificate further certifies an intended use for the produced product that is determined based on which of the trustworthiness requirements are met by the product.

For example, when a patch level of a computing device involved in a certain production step degrades, this does not yet mean that the computing device is necessarily infected. A product produced under the control of such a computing device may still be suitable for being sold to consumers, but may not qualify for being sold for use in critical infrastructure. Accordingly, the intended use (in the example, consumer use or critical infrastructure use) may be determined based on which of the trustworthiness requirements are met and to what degree they are met. This may advantageously allow avoiding excess scrapping of products.

More generally speaking, the cryptographically secured certificate may certify the intended use which indicates that the product has the trustworthiness level required for a specific usage area, e.g., critical infrastructure, or generic industrial use, and/or consumer use. Herein, the cryptographically secured certificate may encode multiple "intended use" information elements that are compatible with the trustworthiness requirements that are met by the product according to the available evidence.

This also may allow to produce technically identical or equivalent products or product variants in different production ways that are in line with different production trustworthiness requirements relevant for different markets (e.g., critical infrastructures, important infrastructures, or general industrial systems; having region- or market-segment specific requirements on secure, trustworthy production).

According to a further embodiment, the proposed method may further comprise: e) performing at least steps a) to c) using virtualized production resources corresponding to the physical production resources so as to produce virtual products; f) determining a level of compliance of the produced virtual products with the trustworthiness requirements; g) if the level of compliance is determined to be insufficient, adjusting the production schedule and/or changing a configuration on at least one of the virtual production resources, and repeating steps e) to g); and h) when the level of compliance is determined to be sufficient, implementing the configuration with which the level of compliance is determined to be sufficient with the physical production resources and causing the technical production job to be performed according to the production schedule with which the level of compliance is determined to be sufficient and using the physical production resources.

In a case in which a trustworthy requirement is binary, i.e. can only be fulfilled or not, the level of trustworthiness may indicate a percentage of trustworthy requirements that were met in each production step. In a case in which a degree to which a trustworthy requirement is quantifiable, the level of trustworthiness can be determined as a lowest, a highest or an average degree to which the trustworthy requirements of each production step are met, for example.

That is, advantageously, the proposed method may be applied in a virtual simulation that is used to plan or to optimize the actual production.

For example, the proposed method may be used to find out, using simulation, how many products can be produced before a patch level of involved computing devices degrades, and if the number is found insufficient, the simulation result may determine that a computing device needs to be patched to a newer firmware level while the production job is in progress to maintain all trustworthiness requirements. Such findings can then be implemented in the real production during step h).

Any embodiment of the first aspect may be combined with any embodiment of the first aspect to obtain another embodiment of the first aspect.

It is noted that a device or system that performs the proposed computer-implemented method of the first aspect may be a dedicated computing device, or may be an edge compute infrastructure, a cloud infrastructure, or an industrial metaverse platform.

According to a second aspect, the invention relates to a computer program product comprising a program code for executing the method of the first aspect or any of its embodiments when run on at least one computer.

A computer program product, such as a computer pro-gram means, may be embodied as a memory card, USB stick, CD-ROM, DVD or as a file which may be downloaded from a server in a network. For example, such a file may be provided by transferring the file comprising the computer program product from a wireless communication network.

According to a third aspect, there is proposed a computing device for performing a technical production job in a number of production steps using a plurality of production resources, wherein a respective trustworthiness requirement is defined for each of the production steps, and the computing device comprises: a) a first unit configured to determine trustworthiness information for the plurality of the production resources; b) a second unit configured to create a production schedule in which each of the number of production steps is assigned to one or more specific ones of the plurality of production resources, wherein the second unit is configured to create the production schedule in consideration of the trustworthiness requirements of the production steps and the determined trustworthiness information of the production resources; and d) a third unit configured to cause the technical production job to be performed according to the created production schedule.

The respective unit may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

The computing device may be embodied as a distributed computing system. The distributed computing system may be, for example, an edge compute infrastructure, a cloud infrastructure, or an industrial metaverse platform.

The embodiments, features and advantages described with reference to the method of the first aspect or any apply mutatis mutandis to the computer program product of the second aspect and to the computing device or the distributed computing system of the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a functional configuration of a production environment according to a first exemplary embodiment;
Fig. 2 visualizes method steps of a production method according to the first exemplary embodiment; and
Fig. 3 visualizes method steps of a production method according to a further development of the first exemplary embodiment; and
Fig. 4 visualizes method steps of a partly virtualized production method according to a second exemplary embodiment.

In the Figures, like reference numerals designate like or functionally equivalent elements, unless otherwise indicated.

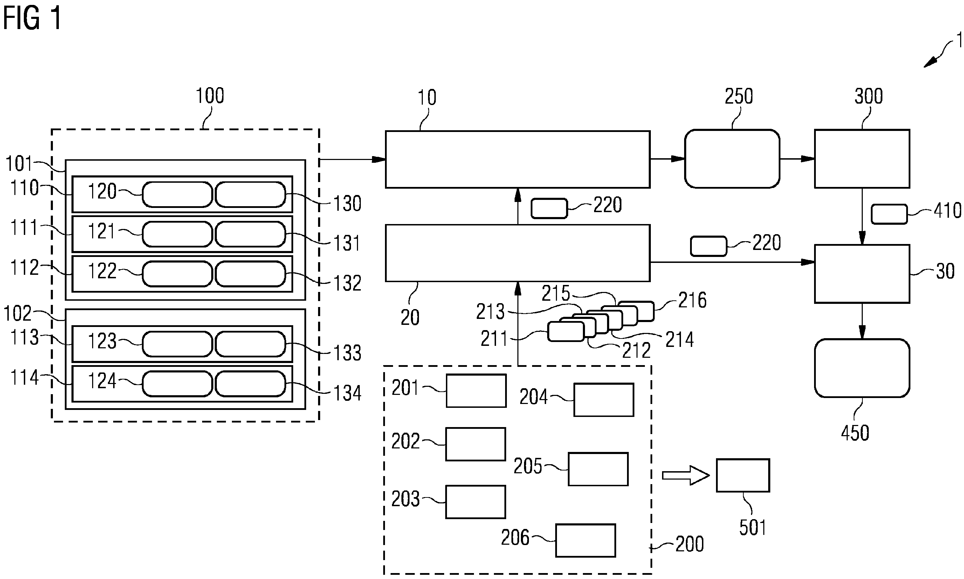

Fig. 1 shows a functional configuration of a production environment 1 according to a first exemplary embodiment.

The production environment 1 comprises a trust-based production scheduler 10, a production resource trust manager 20 and, optionally, a trusted production attestator 30 (to be described later). The trust-based production scheduler 10, the resource trust manager 20 and the optional trusted production attestator 30 may be functional units of a singular computing device of the first exemplary embodiment, or may be separate computing devices of a distributed computing system of the first exemplary embodiment.

Furthermore, the production environment 1 comprises a production system 200 comprising a plurality of production resources 201-206, and a production execution system 300, such as a Manufacturing Execution System, MES.

It is noted that the production system 200 (the individual production resources 201-206) therefore may be distributed over different geographical locations, and different production resources 201-206 may have different configurations and may be operated by different owners, and the like.

Also shown is a queue 100 of technical production jobs comprising a plurality of technical production jobs 101, 102. Each technical production job 101, 102 is subdivided into a number of production steps. That is, technical production job 101 comprises production steps 110, 111 and 112. Technical production job 102 comprises production steps 113 and 114. Each production step 110-114 comprises a respective production step specification 120-124 and a respective trust requirement 130-134. The production step specifications 120-124 comprise functional data that enables the production execution system 300 to carry out the respective production step 110-114 using one or more of the production resources 201-206. The trust requirements 130-134 comprise functional data that describe trust-requirements that should be met by production resources 201-206 that are chosen to perform the respective production step 110-114 by the production execution system 300.

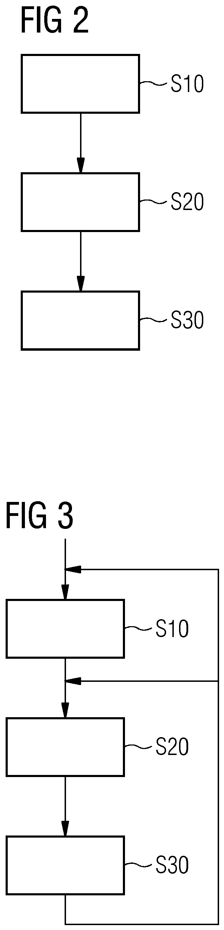

Fig. 2 visualizes method steps of a production method according to the first exemplary embodiment. Reference will be made to Fig. 1 and Fig. 2.

In n step S10, the production resource trust manager 20 obtains, for each of the plurality of production resources 201-206, a respective cryptographically secured trustworthiness attestation 211-216. Assuming that each of the production resources 201-206 is controlled by a respective computing device, such as an industrial controller, the trustworthiness attestations 211-216 may have been issued by a trusted computing base, TCB, of the respective computing device. The production resource trust manager 20 obtains trustworthiness information 220 about each of the production resources 201-206 from the plurality of trustworthiness attestations 211-216 and provides the obtained trustworthiness information 220 to the trust-based production scheduler 10.

It is noted that in the case in which a computing device is controlling the respective production resources 201-206, the respective trustworthiness attestation 211-216, and thus the trustworthiness information 200 obtained therefrom, may relate to a property of the computing device controlling the respective production resource 201-206. Such properties are easy to measure using a trusted computing base. However, it is also conceivable that the trustworthiness information 200 may relate to properties of the actual production resource 201-206 controlled by the respective computing device. Code for measuring trust-related properties of production resources 201-206 may be incorporated in the trusted code base of the respective industrial computing device.

In step S20, the trust-based production scheduler 10 selects one of the technical production jobs 101, 102, such as technical production job 101, for processing. For the selected technical production job 101, the trust-based production scheduler 10 creates a production schedule 250 in which each of the production steps 110-112 of the selected technical production job 101 is assigned to one or more specific ones of the plurality of production resources 201-206 of the production system 200.

Herein, the trust-based production scheduler 10 may take various ever-volatile conditions into account, such as availability of the production resources 201-206, cost associated with using the production resources 201-206, and the like. However, crucially, according to the present exemplary embodiment, the trust-based production scheduler 10 also creates the production schedule 250 in consideration of the trustworthiness requirements 130-132 of each production step 110-112 and in consideration of the determined trustworthiness information 220 of the production resources 201-206. That is, the trust-based production scheduler 10 tries to create the production schedule 250 such that all trustworthiness requirements 130-132 are met, or are met as good as is possible with the production resources 201-206 that are available.

Then, in step S30, the trust-based production scheduler 10 supplies the production schedule 250 to the production execution system 300 so as to cause the production execution system 300 to perform the technical production job 101 using the specific scheduled ones of the production resources 201-206 according to the created production schedule 250 so as to produce products 501.

In this way, it is advantageously possible to automatically ensure that trustworthiness requirements are met. The risk that products 501 are produced and placed on the market that do not meet the trustworthiness requirements may be reduced. The risk that produced products or intermediate versions of the final product 501 have to be scrapped due to failures caused by untrustworthy production resources in production may be reduced.

It is noted that in practice, the production method need to be executed in a sequential fashion. as disclosed. That is, Fig. 3 visualizes method steps of a production method according to a further development of the first exemplary embodiment. As can be seen from comparing Fig. 3 with Fig. 2, and with further reference to Fig. 1, after the trust-based production scheduler 10 has caused the production execution system 300 to start performing the technical production job 101 according to the production plan 250 in step S30, the method may branch back and repeatedly execute step S20 in cycles, and/or may branch back and repeat execution of steps S10 and S20 in cycles.

That is, if, while the technical production job 101 is in progress, and if the trust-based production scheduler 10 determines in the repeated execution of step S10 that any portion of the determined trustworthiness information 200 has changed, the trust-based production scheduler 10 may, during repeated execution of step S20, re-create or modify the production schedule 250 in consideration of the changed trustworthiness information 220. Such changes of the trustworthiness information 200 may occur while the technical production job 101 is in progress, for example, if a security incident is reported on a site where one of the used production resources 201-206 is located, or when a new firmware is released for an industrial controller controlling one of the production resources 201-206 and the industrial controller is not yet updated to the new firmware, or the like. By repeating step S10 in cycles and modifying the production schedule according to any dynamic changes in the trustworthiness information 220, the trust-based production scheduler 10 can make sure that the trustworthiness requirements 130-132 are met even when trustworthiness of the available production resources 201-206 changes dynamically.

Also, even if step S10 is not repeated in cycles and/or if step S10 is repeated in cycles, but no changes in the trustworthiness information 220 are detected, the trust-based production scheduler 10 may repeat step S20 in cycles. That is, if any of the other conditions, such as availability, cost etc. of the production resources 201-206 changes while the technical production job 101 is in progress, the trust-based production scheduler 10 may also recreate or modify the production schedule 250, but again, such recreating or modifying the production schedule 250 is always performed in consideration of the most recently determined trustworthiness information 220 and in consideration of the trust requirements 130-132 of each production step 110-112 of the technical production job 101.

With further reference to Fig. 1, another proposed further development of the first exemplary embodiment is described. That is, as sown in Fig. 1, the production execution system 300 may collect production trustworthiness evidence 410 for each product 501 that is produced under control of the production execution system 300. The trustworthiness evidence 410 may comprise information as to production resources 201-206 used for producing a specific product, the trustworthiness requirements 130-134 that were in force at the time when the product 501 was produced, and the like. The trustworthiness evidence 410 may be cryptographically secured using a digital signature of the production execution system 300 or the like.

According to the present further development, the trusted production attestator 30 is provided with, consumes and records, in association with time, the trustworthiness information 220 that is obtained by the production resource manager 20 from the trustworthiness attestations 211-216. The trusted production attestator 30 also receives, for each product 501 that is produced under control of the production execution system 300, the corresponding production trustworthiness evidence 410, by comparing the trustworthiness evidence 410 collected during production with the time log of trustworthiness information 220 collected from the production resource trust manager 20, the trusted production attestator 30 can perform, for each product produced during the technical production job 101 was in progress, an audit and determine whether and to what degree the trustworthiness requirements 130-132 defined for each production step 110-112 that led to production of the product 501 were met. Accordingly, the trusted production attestator 30 provides a cryptographically secured certificate 450 that certifies the results of the audit, i.e., which trustworthiness requirements 130-132 are met by the product, and/or certifies to what degree these trustworthiness requirements 130-132 are met. The certificate 450 provided for each product 501 is preferably cryptographically linked to an identity of the produced product 501. For example, the certificate 450 may be a good credential, such as an IDevID digital device certificate, or a BRSKI onboarding voucher, or a digital product passport (DPP). The certificate 450 may only be issued if during production of the associated product, all trustworthiness requirements 130-132 were met. Alternatively, or in addition thereto, the certificate 450 may comprise an attribute containing information about which trustworthiness requirements 130-132 were met and/or to what degree they were met.

It is also conceivable, according to another preferred further development, that the trusted production attestor 30 automatically decides upon one or more acceptable or intended use cases of the produced product 501 based on the performed audit. For example, if all trustworthiness requirements 130-132 were met sufficiently, an intended use may be use for critical infrastructure. If only certain ones of the trustworthiness requirements 130-132 were met, or if some of the trustworthiness 130-132 were met only to a certain degree, an intended use may be use for consumer needs. Only if a substantial part of the trustworthiness requirements 130-132 were not met sufficiently, no intended use may be identified and the produced product 501 may need to be scrapped. On the other hand, if the trusted production attestator 30 identifies one or more intended uses for the produced product 501 based on which of the trustworthiness requirements 130-132 are met by the product, the one or more intended uses may also be indicated in (be certified by) the certificate 450.

Accordingly, the proposed method according to the discussed preferred further developments may automatically maximize the usable output of the technical production job 101 by certifying, for each product 501 produced, one or more of a plurality of potential intended uses where for which it is safe to market the product 501, thus advantageously minimizing the need for scrapping.

Although the present invention has been described in accordance with preferred exemplary embodiments, it is obvious for the person skilled in the art that modifications are possible in all embodiments.

For the first exemplary embodiment illustrated in Fig. 1, it was described that the trustworthiness information 220 is obtained from cryptographically secured trustworthiness attestations 211-216 that were issued by a trusted computing base of a respective computing device controlling each of the production resources 201-206. However, there is no limitation to this. The trustworthiness information may also be obtained from a management system, such as an ERP system, that manages the production resources 201-206, or may be obtained from a distributed ledger, such as a Blockchain, in which trustworthiness information of the production resources 201-206 is recorded. Trustworthiness information 220 may relate to any properties of the respective production resource 201-206 or the site on which the respective production resource 201-206 is installed and is in no way limited to relating to properties of an industrial computing device controlling the respective 201-206 resource, which was merely recited as one example.

Use of the proposed method with a physical production system 200 has been described in the first exemplary embodiment. However, in a second exemplary embodiment, the proposed method may be used with a simulated production system on a simulator or in an industrial Metaverse.

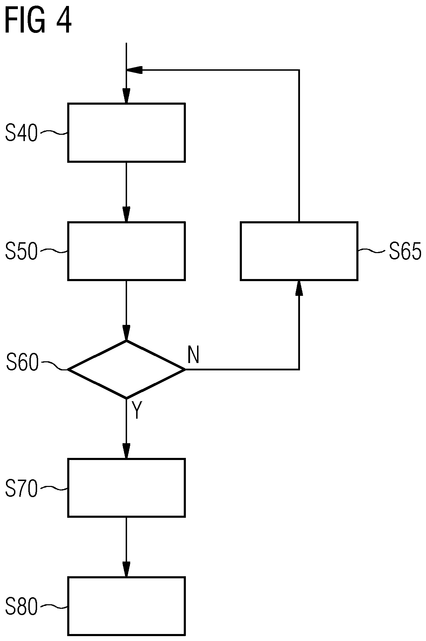

That is, Fig. 4 visualizes method steps of a partly virtualized production method according to a second exemplary embodiment. Reference will be made to Fig. 1, 3 and 4.

Step S40 of the second exemplary embodiment comprises performing steps S10 to S30 as discussed for the exemplary embodiment (or any of its preferred further developments and variants) using virtualized production resources each corresponding to one of the physical production resources 201-206 so as to produce virtual products corresponding to the actual products 501 that are to be produced.

When the virtual production job that corresponds to the real production job 101 has ended, in step S50, a level of compliance of the produced virtual products with the trustworthiness requirements 130-132 of the technical production job 101 that was simulated is determined. Such determination may be made in a similar way as the audit that was described for the trusted production attestator 30 of the further development of the first exemplary embodiment. I.e., the level of compliance may indicate how many of the trustworthiness requirements 130-132 were met and/or to which degree each of the trustworthiness requirements 130-132 was met during the simulation. The level of compliance may be determined as a lowest level of compliance of all virtual products produced, for example, or as an average level of compliance, or the like. Alternatively, the level of compliance may be a number of virtual products that would not need not be scrapped, or a number of virtual products that would be suitable for a trusted intended use, such as use for critical infrastructure, or the like.

Then, in step S60, it is determined whether the level of compliance determined in step S50 is sufficient. If the level of compliance is determined to be insufficient (N at S60), the method branches to step S65. In step S65, at least one of the production schedule 250 and a configuration of at least one of the production resources 201-206 is adjusted with the goal of improving the level of compliance. For example, firmware of the virtual production resources corresponding to production resources 201-206 may be updated, the production schedule 205 may be adjusted to use different ones of the virtual production resources, or the like. Then, the method cycles back and repeats steps S40, S50 and S60 until the level of compliance is determined to be sufficient (Y at S60).

Then, in step S70, a configuration (including a production schedule and configurations of the virtual production resources 201-206) for which the level of compliance has been found to be sufficient while performing a virtual production job according to step S40, is implemented with the physical production resources 201-206 and the physical production execution system 300.

Finally, in step S80, the physical production execution system 300 is caused to perform the physical technical production job 101 using the physical production resources 201-206 that have been reconfigured in step S70 and according to the production schedule for which the level of compliance was found to be sufficient, so as to produce physical goods 501 with a sufficient level of compliance.

Such simulations may be advantageous for determining, for example, a necessity of updating firmware of any of the production resources 201-206 and or of acquiring additional production resources in advance (such necessity may depend upon how long the technical production job 101 is determined to take in the simulation) and performing the necessary actions upfront so as to avoid delays for acquiring updated firmware or addition production resources while the physical technical production job 101 is already being performed.

It is noted that in the described exemplary embodiments, it was assumed that a trustworthiness requirement is defined for each of the plurality of production steps 110-114 of each of the production jobs 101, 102. However, it goes without saying that a production job 101, 102 may also comprise one or more further production steps for which no trustworthiness requirement is defined (or a trustworthiness requirement of "nothing required" is defined). In this case, those further production steps may be scheduled in consideration of general aspects such as production resource 201-206 cost and availability, but without consideration of the production resources' 201-206 trustworthiness information 220, and/or may be scheduled to be performed by further (non-shown) production resources for which no trustworthiness information 220 is available. However, any such computer-implemented method of performing a technical production job shall also fall under the scope of the described exemplary embodiments as long as a trustworthiness requirement is defined for at least one production step 110-114 of at least one production job 101, 102 and is considered when scheduling said at least one production step 110-114 in the manner described for the described exemplary embodiments.

## Claims

1. A computer-implemented method of performing a technical production job (101, 102) in a number of production steps (110-114) using a plurality of production resources (201-206), wherein a respective trustworthiness requirement (130-134) is defined for each of the production steps (110-114), and the method comprises:
a) determining (S10) trustworthiness information (220) for the plurality of the production resources (201-206);
b) creating (S20) a production schedule (250) in which each of the number of production steps (110-114) is assigned to one or more specific ones of the plurality of production resources (201-206),
wherein the production schedule (250) is created in consideration of the trustworthiness requirements (130-134) of the production steps (110-114) and the determined trustworthiness information (220) of the production resources (201-206); and
c) causing (S30) the technical production job (101, 102) to be performed according to the created production schedule (250).

2. The method of claim 1,
wherein step a) is repeated in cycles while the technical production job (101, 102) is in progress, and if any of the determined trustworthiness information (220) has changed, the production schedule (250) is modified in consideration of the changed trustworthiness information (220).

3. The method of claim 1 or 2,
wherein step b) is repeated in cycles while the technical production job (101, 102) is in progress.

4. The method of one of claims 1 to 3,
wherein in step a), the trustworthiness information (220) is obtained from a cryptographically secured trustworthiness attestation (211-216) issued by a trusted computing base of a computing device controlling the respective production resource (201-206).

5. The method of any one of claims 1 to 4,
wherein in step a), the trustworthiness information (220) is obtained from a distributed ledger comprising records of trustworthiness information of the production resources (201-206).

6. The method of any one of claims 1 to 5,
wherein in step a), the trustworthiness information (220) is obtained from a management system managing the production resources (201-206).

7. The method of any one of claims 1 to 6,
wherein the respective trustworthiness requirement (130-134) and/or the respective trustworthiness information (220) relate to a property of the computing device controlling the respective production resource (201-206).

8. The method of any one of claims 1 to 7, further comprising:
d) for each product (501) produced in step c), providing a cryptographically secured certificate (450) certifying those trustworthiness requirements (130-134) that are met by the product (501).

9. The method of claim 8,
wherein the cryptographically secured certificate (450) is cryptographically linked to an identity of the produced product (501).

10. The method of claim 8 or 9,
wherein the cryptographically secured certificate further (450) certifies an intended use for the produced product (501) that is determined based on which of the trustworthiness requirements (130-134) are met by the product (501).

11. The method of any one of claims 1 to 10, further comprising:
e) performing (S40) at least steps a) to c) using virtualized production resources corresponding to the physical production resources (201-206) so as to produce virtual products;
f) determining (S50) a level of compliance of the produced virtual products with the trustworthiness requirements (130-134);
g) if the level of compliance is determined to be insufficient, adjusting (S65) the production schedule (250) and/or changing a configuration on at least one of the virtual production resources, and repeating steps e) to g);
h) when the level of compliance is determined to be sufficient, implementing (S70) the configuration with which the level of compliance is determined to be sufficient with the physical production resources (201-206) and causing (S80) the technical production job (101, 102) to be performed according to the production schedule (250) with which the level of compliance is determined to be sufficient and using the physical production resources (201-206).

12. A computer program product comprising a program code for executing the method of one of claims 1 to 11 when run on at least one computer (10, 20, 30).

13. A computing device (10, 20) for performing a technical production job (101, 102) in a number of production steps (110-114) using a plurality of production resources (201-206), wherein a respective trustworthiness requirement (130-134) is defined for each of the production steps (110-114), and the computing device (10, 20) comprises:
a) a first unit (10) configured to determine trustworthiness information (220) for the plurality of the production resources (201-206);
b) a second unit (20) configured to create a production schedule (250) in which each of the number of production steps (110-114) is assigned to one or more specific ones of the plurality of production resources (201-206);
wherein the second unit (20) is configured to create the production schedule (250) in consideration of the trustworthiness requirements (130-134) of the production steps (110-114) and the determined trustworthiness information (220) of the production resources (201-206); and
d) a third unit (20) configured to cause the technical production job (101, 102) to be performed according to the created production schedule (250).

14. The computing device of claim 13,
wherein the computing device (10, 20) is embodied as a distributed computing system (10, 20).
